# EUROPEAN PATENT APPLICATION

(11) **EP 4 813 553 A1**
(43) Date of publication of application: **30.09.2026**
(21) Application number: 25167079.0
(22) Date of filing: 28.03.2025
(51) Int. Cl.: B23B 47/26, B23Q 5/04, B23Q 5/10, B23Q 5/38, B25H 1/00, B28D 1/04

(54) **MACHINING ASSEMBLY**

(71) Applicant: Tractive AB, 781 70 Borlänge (SE)
(72) Inventor: JOHNSEN, Anders, 781 94 Borlänge (SE)
(74) Representative: Bjerkén Hynell KB

(57) **Abstract**

A machining assembly with a feed gear wheel (13) configured for engagement with a cog track on a machine stand and operatively connected to a planer carrier (33) of a planetary gear to allow torque to be transmitted from the planet carrier to the feed gear wheel. The planer carrier (33), and thereby the feed gear wheel (13), is selectively rotatable either by means of an electric motor, which is operatively connected to a first gear member (31) of the planetary gear, or by means of a manually operated drive mechanism, which is operatively connected to a second gear member (32) of the planetary gear. The machining assembly comprises a first rotation restraining arrangement capable of preventing said second gear member (32) from being rotated by the planet gears (34) of the planetary gear and a second rotation restraining arrangement capable of preventing said first gear member (31) from being rotated by the planet gears.

## Description

### FIELD OF THE INVENTION AND PRIOR ART

The present invention relates to a machining assembly according to the preamble of claim 1.

For making of holes in concrete or other hard materials, it is known to use a machining assembly with a drilling tool driven by a drive motor where the drive motor is arranged in a drive unit carried by a machine stand. Such a machining assembly is for instance previously known from WO 82/00863 A1. In the machining assembly disclosed in WO 82/00863 A1, the drive unit is connected to a feed unit, by means of which the drive unit is displaceable along a column included in the machine stand. The drilling tool may for instance consist of a hollow cylindrical drill bit, which at one end is attached to a spindle driven by the drive motor and which at its other end is provided with machining bodies with cutting edges of diamond, wherein the machining bodies are fixed to the outer annular edge of the drill bit. When a hole is to be made in a structural element, such as a joist or a wall, the drive unit is fed along the column in the direction towards the structural element, wherein the drill bit works its way into the structural element and cuts out a cylindrical body from the structural element while leaving a corresponding cylindrical hole therein. The feed unit of the machining assembly disclosed in WO 82/00863 A1 is provided with a rotatable feed gear wheel which is in engagement with a cog track on the machine stand, wherein the feed gear wheel is configured to be manually rotated in order to manually move the machining assembly along the machine stand.

It is also previously known, for instance from WO 2018/174785 A1, that a machining assembly of the above-mentioned type may be provided with a feed motor for automatic movement of the machining assembly along an associated machine stand. In the machining assembly disclosed in WO 2018/174785 A1, the feed unit is provided with a first feed gear wheel and a second feed gear wheel, which are both in engagement with the cog track on the machine stand, wherein the first feed gear wheel is connected to an electric feed motor in order to allow the first feed gear wheel to be rotated under the effect of the electric feed motor for an automatic movement of the machining assembly along the machine stand, and wherein the second feed gear wheel is connected to a manually operated drive mechanism in order to allow the second feed gear wheel to be rotated under the effect of the manually operated drive mechanism for a manual movement of the machining assembly along the machine stand. In this case, the first feed gear wheel has to be disconnected from the electric feed motor by manual disconnection of a clutch when the machining assembly is to be manually moved along the guide track on the machine stand by manual rotation of the second feed gear wheel via the manually operated drive mechanism.

### OBJECT OF THE INVENTION

The object of the present invention is to provide a machining assembly of the above-mentioned type with new and favourable design.

### SUMMARY OF THE INVENTION

According to the present invention, said object is achieved by means of a machining assembly having the features defined in claim 1.

The machining assembly according to the invention is moveable along a guide track on a machine stand and comprises:
- a first electric motor;
- a rotatable spindle configured for connection to a machining tool;
- a first transmission system for transmitting torque from the first electric motor to the spindle to allow the spindle to be rotated under the effect of the first electric motor;
- guide members configured for engagement with said guide track on the machine stand in order to guide the machining assembly along the guide track;
- a feed gear wheel rotatably mounted to a housing included in the machining assembly, wherein the feed gear wheel is configured for engagement with a cog track arranged on the machine stand in parallel with said guide track in order to allow the machining assembly to move along the guide track by rotation of the feed gear wheel;
- a planetary gear arranged in said housing and having a first gear member, a second gear member, a planet carrier and several planet gears rotatably mounted to the planet carrier, wherein one of said first and second gear members is a sun gear and the other one of said first and second gear members is a ring gear, each planet gear meshing with the first gear member and with the second gear member, and wherein the planet carrier is operatively connected to the feed gear wheel to allow torque to be transmitted from the planet carrier to the feed gear wheel for rotation thereof;
- a second electric motor;
- a second transmission system operatively connected to said first gear member of the planetary gear for transmitting torque from the second electric motor to the first gear member to thereby allow the first gear member to be rotated under the effect of the second electric motor;
- a manually operated drive mechanism operatively connected to said second gear member of the planetary gear to allow the second gear member to be rotated under the effect of the manually operated drive mechanism;
- a first rotation restraining arrangement capable of preventing said second gear member of the planetary gear from being rotated by the planet gears in order to allow torque to be transmitted from the second electric motor to the feed gear wheel via the second transmission system and the planetary gear and thereby allow the feed gear wheel to be rotated under the effect of the second electric motor; and
- a second rotation restraining arrangement capable of preventing said first gear member of the planetary gear from being rotated by the planet gears in order to allow torque to be transmitted from the manually operated drive mechanism to the feed gear wheel via the planetary gear and thereby allow the feed gear wheel to be rotated under the effect of the manually operated drive mechanism.

According to a first alternative, the above-mentioned first gear member is the sun gear of the planetary gear, wherein the second gear member is the ring gear of the planetary gear. According to a second alternative, the first gear member is the ring gear of the planetary gear, wherein the second gear member is the sun gear of the planetary gear.

The above-mentioned first electric motor of the machining assembly constitutes a drive motor for rotating a machining tool connected to the spindle, whereas the above-mentioned second electric motor of the machining assembly constitutes a feed motor for automatic movement of the machining assembly along the associated machine stand. The manually operated drive mechanism is to be used for manual movement of the machining assembly along the machine stand. With the above-specified arrangement of the planetary gear, one and the same feed gear wheel may be selectively rotated either by means of the second electric motor or by means of the manually operated drive mechanism, at the discretion of the machine operator. Using one single feed gear wheel, instead of two separate feed gear wheels, simplifies the process for the machine operator to connect the machining assembly to the guide track and cog track on the machine stand when mounting the machining assembly to the machine stand at the site where a machining operation is to be performed.

The above-mentioned first rotation restraining arrangement is with advantage included in the manually operated drive mechanism. The above-mentioned second rotation restraining arrangement is with advantage included in the second transmission system.

According to an embodiment of the invention:
- the second transmission system comprises a non-backdrivable worm gear with a worm screw and a worm wheel, wherein the worm wheel meshes with the worm screw and is operatively connected to the second electric motor via the worm screw to allow the worm wheel to be rotated by the second electric motor via the worm screw; and
- said first gear member of the planetary gear is operatively connected or connectable to the worm wheel to allow the first gear member to be rotated by the second electric motor via the non-backdrivable worm gear, wherein the second rotation restraining arrangement is formed by the non-backdrivable worm gear. Thus, in this case, the second rotation restraining arrangement forms part of the second transmission system. By the specified arrangement of a non-backdrivable worm gear in the second transmission system, the first gear member of the planetary gear is rotatable by the second electric motor via the second transmission system when the second electric motor is operated and is automatically prevented from being rotated by the planet gears of the planetary gear when the second gear member is manually rotated by the machine operator via the manually operated drive mechanism. Hereby, no manually operated clutch, locking mechanism or the similar is necessary in the second transmission system to enable switching from automatic feeding to manual feeding. However, as an alternative to this type of automatically actuated rotation restraining arrangement, the second rotation restraining arrangement could also comprise any suitable type of locking mechanism that is to be manually actuated by the machine operator in order to prevent said first gear member of the planetary gear from being rotated by the planet gears of the planetary gear when the machine operator intends to switch from automatic feeding to manual feeding.

According to another embodiment of the invention, the manually operated drive mechanism comprises a manually rotatable drive shaft rotatably mounted to said housing and a gear mechanism arranged in the housing, wherein the drive shaft is operatively connected to said second gear member of the planetary gear via the gear mechanism to allow the second gear member to be rotated under the effect of the drive shaft via the gear mechanism. In this case, said second gear member of the planetary gear is preferably a ring gear having an internal toothing on its inner periphery and an external toothing on its outer periphery, wherein the planet gears mesh with the internal toothing on the ring gear and said gear mechanism of the manually operated drive mechanism comprises a gear wheel meshing with the external toothing on the ring gear. The external toothing on said ring gear is preferably a helical toothing, wherein said gear wheel of the gear mechanism may be a helical gear wheel that is non-rotatably fixed to the drive shaft.

Another embodiment of the invention is characterized in:
- that the first rotation restraining arrangement is configured to act on the drive shaft; and
- that the first rotation restraining arrangement comprises a manually manoeuvrable manoeuvring member, by means of which the first rotation restraining arrangement is shiftable between a rotation-restraining state, in which the first rotation restraining arrangement is configured to restrain rotation of the drive shaft in relation to said housing, and a rotation-allowing state, in which the first rotation restraining arrangement is configured to allow rotation of the drive shaft in relation to said housing.

Thus, in this case, the first rotation restraining arrangement forms part of the manually operated drive mechanism. As an alternative to a rotation restraining arrangement that is configured to act on the drive shaft of the manually operated drive mechanism, the first rotation restraining arrangement could be formed by a non-backdrivable worm gear with a worm screw and a worm wheel, with the worm wheel meshing with the worm screw and being operatively connected to the drive shaft of the manually operated drive mechanism via the worm screw to allow the worm wheel to be rotated by the drive shaft via the worm screw, and with the second gear member of the planetary gear being operatively connected to the worm wheel to allow the second gear member to be rotated by the drive shaft via the non-backdrivable worm gear. By such an arrangement of a non-backdrivable worm gear in the manually operated drive mechanism, the second gear member of the planetary gear is allowed to rotate when the drive shaft included in the manually operated drive mechanism is manually rotated and is automatically prevented from being rotated by the planet gears of the planetary gear when the first gear member is rotated by the second electric motor via the second transmission system.

According to another embodiment of the invention, the first rotation restraining arrangement comprises one or more first rotation restraining elements non-rotatably connected to the drive shaft and one or more second rotation restraining elements non-rotatably connected to said housing, wherein said first and second rotation restraining elements are configured to be pressed against each other into rotation-restraining positive or frictional engagement with each other in the rotation-restraining state of the first rotation restraining arrangement.

According to another embodiment of the invention, said manoeuvring member comprises an actuating element and a manoeuvring element in the form of a knob or hand lever fixed to the actuating element, wherein the actuating element is connected to said housing via an external thread on the actuating element and, by manual operation of the manoeuvring element, rotatable in relation to the housing between a first position, corresponding to the rotation-restraining state of the first rotation restraining arrangement and in which said first and second rotation restraining elements are pressed against each other into rotation-restraining positive or frictional engagement with each other under the effect of the actuating element, and a second position, corresponding to the rotation-allowing state of the first rotation restraining arrangement and in which said first and second rotation restraining elements are rotatable in relation to each other to allow manual rotation of the drive shaft. Said actuating element preferably has the form of a sleeve with a central bore, wherein the drive shaft extends with play though the central bore in the actuating element.

According to another embodiment of the invention, said first and second rotation restraining elements have the form of ring-shaped discs and are arranged side by side in a space between an inner wall surface of a cavity inside said housing and an outer peripheral surface of a part of the drive shaft surrounded by said inner wall surface, wherein the first and second rotation restraining elements are configured to be pressed against each other into rotation-restraining frictional engagement with each other in the rotation-restraining state of the first rotation restraining arrangement. Hereby, the first rotation restraining arrangement is capable of acting as an impact damper in its rotation-restraining state, wherein forces from potential impacts on the machining assembly may be absorbed by slipping between the first and second rotation restraining elements. This prevents such impacts from being transmitted undampened to the machine stand, which might otherwise cause the machine stand to become dislocated.

The above-mentioned first and second rotation restraining elements are preferably configured to remain in frictional contact with each other under the effect of a spring force from one or more spring elements in the rotation-allowing state of the first rotation restraining arrangement to thereby exert a braking effect on the drive shaft in the rotation-allowing state of the first rotation restraining arrangement. Hereby, the first rotation restraining arrangement may also, in its rotation-allowing state, act as a slip brake for the manually operated drive mechanism and prevent the machining assembly from unintentionally moving downwards along the guide track on the machine stand due to the effects of gravity on the machining assembly when no torque is exerted on the manually rotatable drive shaft by the machine operator.

According to another embodiment of the invention, the above-mentioned housing and guide members form part of a feed unit, wherein the machining assembly further comprises a drive unit, which is detachably mounted to the feed unit and which includes the first and second electric motors, the first transmission system and the spindle. By having the second electric motor, i.e. the feed motor, arranged in the drive unit, no electric cables or electric equipment need to be included in the feed unit, which simplifies the construction of the feed unit. Furthermore, by arranging the first and second electric motors, i.e. the drive motor and the feed motor, in the same housing, i.e. in the housing of the drive unit, the overall weight and size of the machining assembly may be reduced as compared to the case when the drive motor and the feed motor are arranged in two separate housings. However, as an alternative, the feed motor, the second transmission system, the planetary gear and the manually operated drive mechanism could be arranged in a feed unit and the drive motor and the first transmission system in a separate drive unit that is detachably mounted to the feed unit. As a further alternative, the machining assembly could be designed as a single unit, i.e. without separate drive and feed units that are detachable from each other.

Further advantageous features of the machining assembly according to the present invention will appear from the description following below and the dependent claims.

### BRIEF DESCRIPTION OF THE DRAWINGS

The invention will in the following be more closely described by means of embodiment examples, with reference to the appended drawings. In the drawings:
- Figs 1a and 1b: are perspective views from different directions of a machining assembly according to an embodiment of the present invention and an associated machine stand,
- Fig 2: is a perspective view of a drive unit included in the machining assembly of Figs 1a and 1b,
- Fig 3: is a plan view from above of a drive unit and a feed unit included in the machining assembly of Figs 1a and 1b, as seen with the drive unit disconnected from the feed unit,
- Fig 4: is a cut according to the line IV-IV in Fig 3,

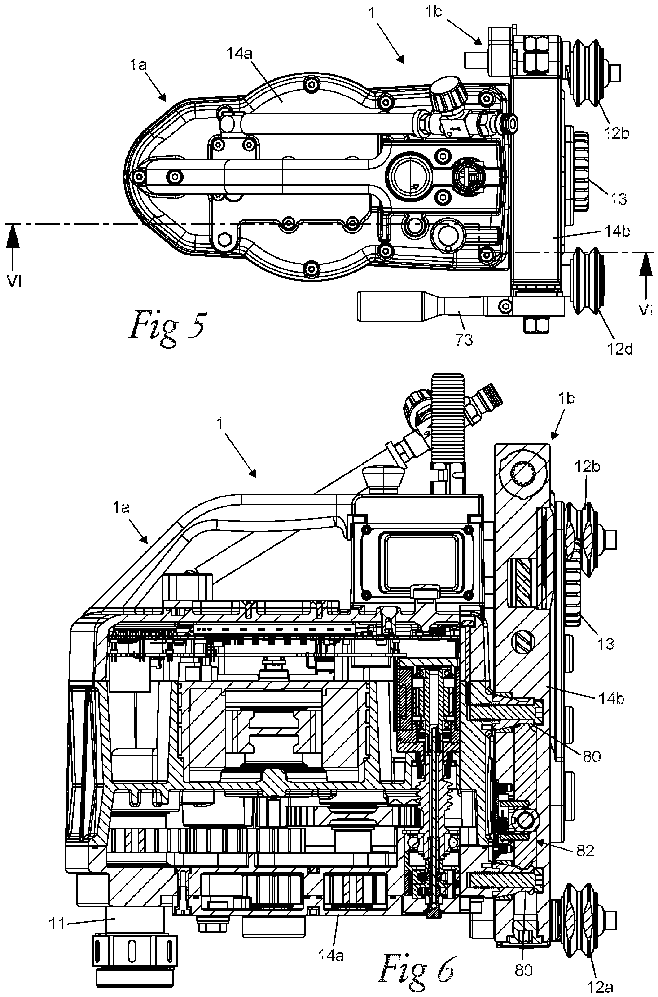

- Fig 5: is a plan view from above of the drive unit and the feed unit, as seen with the drive unit mounted to the feed unit,
- Fig 6: is a cut according to the line VI-VI in Fig 5,
- Fig 7: is a perspective view of a first electric motor and a transmission system included in the drive unit,
- Fig 8: is a lateral view of the electric motor and transmission system of Fig 7,
- Fig 9: is a perspective view of a second electric motor and a transmission mechanism included in the drive unit,
- Fig 10: is a lateral view of the electric motor and transmission mechanism of Fig 9,
- Fig 11: is a cut according to the line XI-XI in Fig 10,
- Figs 12a and 12b: are perspective views from different directions of the feed unit,
- Fig 13: is a lateral view of the feed unit,
- Fig 14: is a rear view of the feed unit,
- Fig 15: is a cut according to the line XV-XV in Fig 13,
- Fig 16: is a cut according to the line XVI-XVI in Fig 14,
- Figs 17a and 17b: are exploded perspective views from different directions of components included in the feed unit,
- Fig 18: is an exploded perspective view of other components included in the feed unit,
- Fig 19: is a partly cut rear view of a part of the feed unit,
- Fig 20: is a perspective view of components included in the feed unit,
- Fig 21: is a lateral view of the components of Fig 20,
- Fig 22: is a lateral view of a part of the feed unit, as seen with a manoeuvring member removed from the feed unit for the sake of clarity,
- Figs 23a and 23b: are lateral views of a part of the feed unit, as seen with the manoeuvring member in two different positions,
- Fig 24: is a perspective view of components included in the feed unit,
- Fig 25: is a lateral view of the components of Fig 24,
- Fig 26: is an exploded perspective view of the components of Fig 24, and
- Fig 27: is a cut according to the line XXVII-XXVII in Fig 25.

### DETAILED DESCRIPTION OF EMBODIMENTS OF THE INVENTION

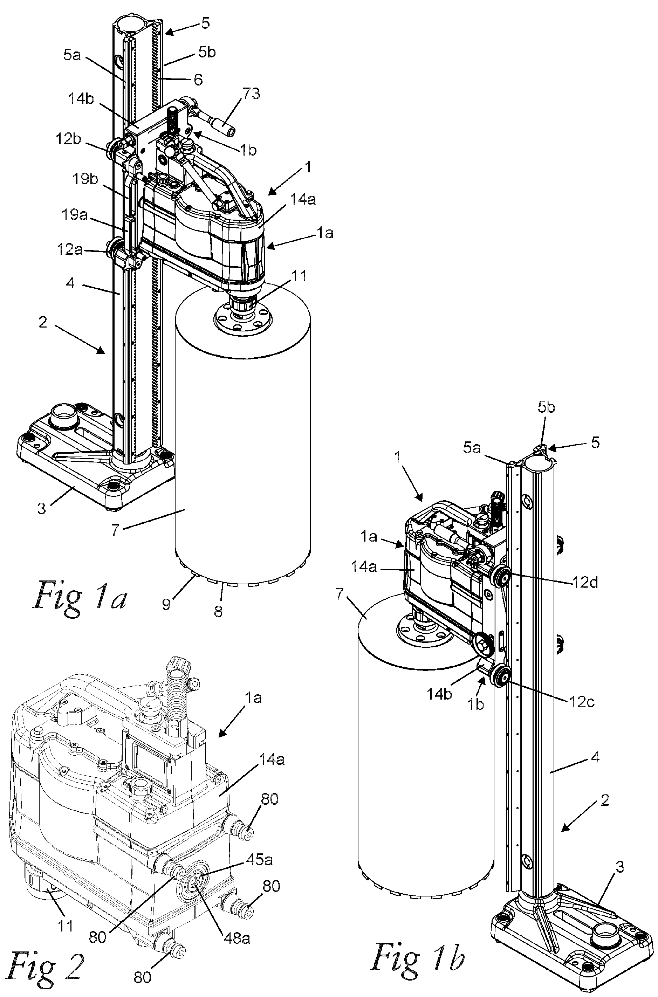

Figs 1a and 1b show a machining assembly 1 according to an embodiment of the present invention mounted to an associated machine stand 2. The machine stand 2 is configured to support the machining assembly 1.

In the illustrated example, the machine stand 2 comprises a base plate 3, through which the machine stand is intended to rest against a supporting surface, and an elongated column 4 which is attached to and projects from the base plate 3. The column 4 is with advantage pivotally mounted to the base plate 3 to allow an adjustment of the inclination of the column in relation to the base plate. A guide track 5 extends along the column 4. In the illustrated example, the guide track 5 is formed by two elongated guide track elements 5a, 5b which are arranged in parallel with and at a distance from each other. A cog track 6 extends along the column 4 in parallel with the guide track 5.

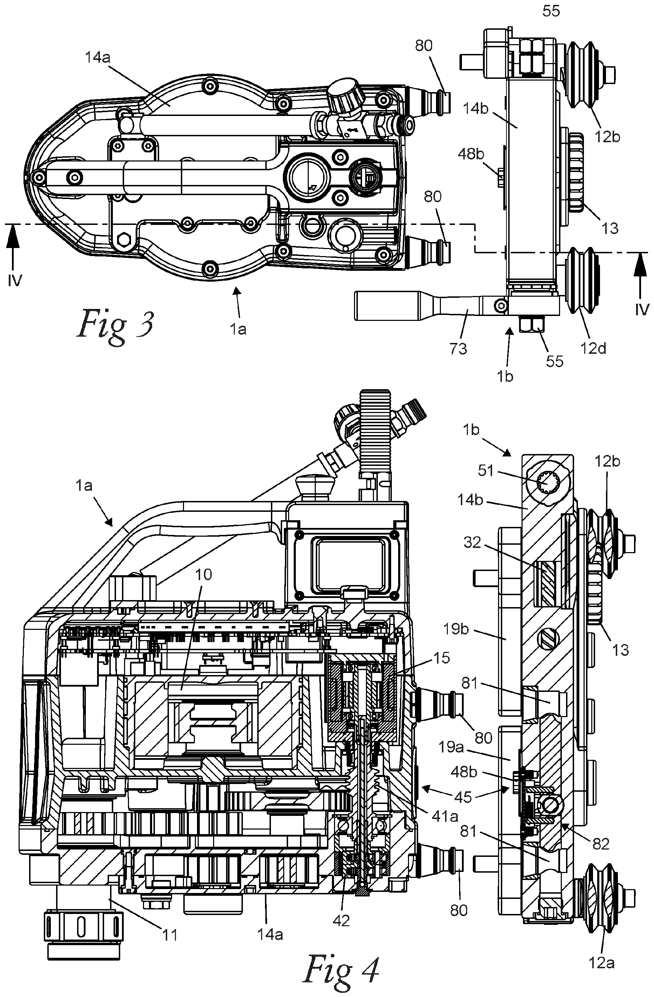

The machining assembly 1 comprises:
- a first electric motor 10 (see Figs 4, 7 and 8), in the following referred to as drive motor;
- a spindle 11, which is rotatable by the drive motor 10 and configured for connection to a machining tool 7;
- a first transmission system 20 for transmitting torque from the drive motor 10 to the spindle 11 so as to allow the spindle to be rotated under the effect of the drive motor;
- guide members 12a-12d configured for engagement with the guide track 5 on the machine stand 2 in order to guide the machining assembly 1 along the guide track;
- a feed gear wheel 13 rotatably mounted to a housing 14b included in the machining assembly 1, wherein the feed gear wheel 13 is configured for engagement with the cog track 6 on the machine stand 2 in order to allow the machining assembly 1 to move along the guide track 5 on the machine stand by rotation of the feed gear wheel 13;
- a planetary gear 30 arranged in said housing 14b and having a first gear member 31, a second gear member 32, a planet carrier 33 and several planet gears 34 rotatably mounted to the planet carrier 33, wherein one of said first and second gear members 31, 32 is a sun gear and the other one of said first and second gear members 31, 32 is a ring gear, each planet gear 34 meshing with the first gear member 31 and with the second gear member 32, and wherein the planet carrier 33 is operatively connected to the feed gear wheel 13 so as to allow torque to be transmitted from the planet carrier 33 to the feed gear wheel 13;
- a second electric motor 15 (see Figs 4 and 9-11), in the following referred to as feed motor;
- a second transmission system 40a, 40b operatively connected to said first gear member 31 of the planetary gear 30 for transmitting torque from the feed motor 15 to the first gear member 31 so as to allow the first gear member 31 to be rotated under the effect of the feed motor 15; and
- a manually operated drive mechanism 50 operatively connected to said second gear member 32 of the planetary gear 30 so as to allow the second gear member 32 to be rotated under the effect of the manually operated drive mechanism 50.

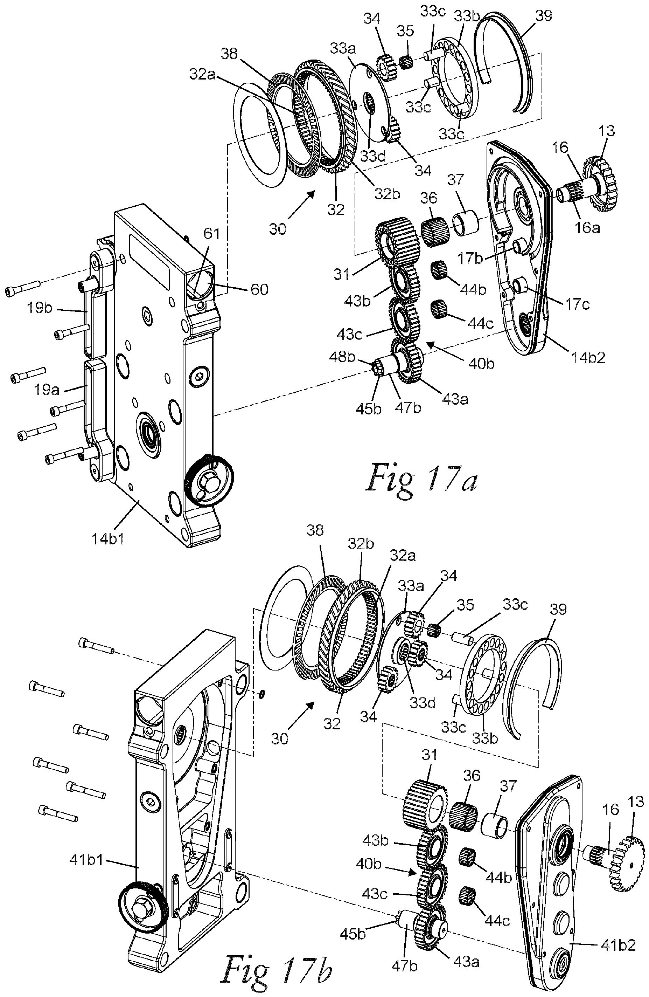

In the illustrated embodiment, the planet carrier 33 of the planetary gear 30 comprises a circular planet carrier plate 33a (see Figs 17a and 17b), a planet carrier ring 33b axially spaced from the planet carrier plate 33a and three planet pins 33c equally distributed about the centre axis of the planet carrier plate 33a and fixed between the planet carrier plate 33a and the planet carrier ring 33b, wherein the planetary gear 30 comprises three planet gears 34 rotatably mounted to a respective one of the planet pins 33c via a needle roller bearing 35.

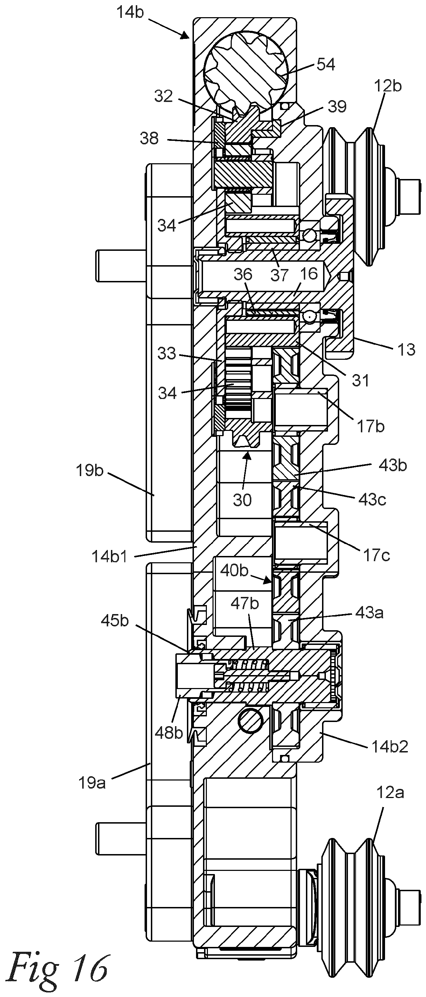

In the illustrated embodiment, the feed gear wheel 13 is non-rotatably fixed to a rotatable gear shaft 16 (see Figs 16 and 17), which in its turn is rotatably mounted to said housing 14b. The gear shaft 16 is non-rotatably connected to the planet carrier 33, preferably through external splines 16a on the gear shaft 16 that mesh with corresponding internal splines provided in a central bore 33d in the planet carrier plate 33a. The planet carrier 33 may as an alternative be operatively connected to the feed gear wheel 13 in any other suitable manner, for instance through a gear mechanism that is configured to transmit torque from the planet carrier 33 to the feed gear wheel 13.

Any desired type of machining tool may be detachably attached to the spindle 11 by means of a suitable coupling, for instance a coupling of the type described in closer detail in WO 2011/129751 A1, in order to allow the machining tool to be rotated under the effect of the drive motor 10. In the example illustrated in Figs 1a and 1b, the machining tool 7 is a drilling tool in the form of a cylindrical drill bit, which at an outer ring-shaped edge 8 is provided with machining bodies 9 with cutting edges of diamond. This type of drilling tool is intended to be used for making holes in concrete or other hard materials. Also other types of drilling tools or machining tools for another type of machining than making of holes may be attached to spindle 11.

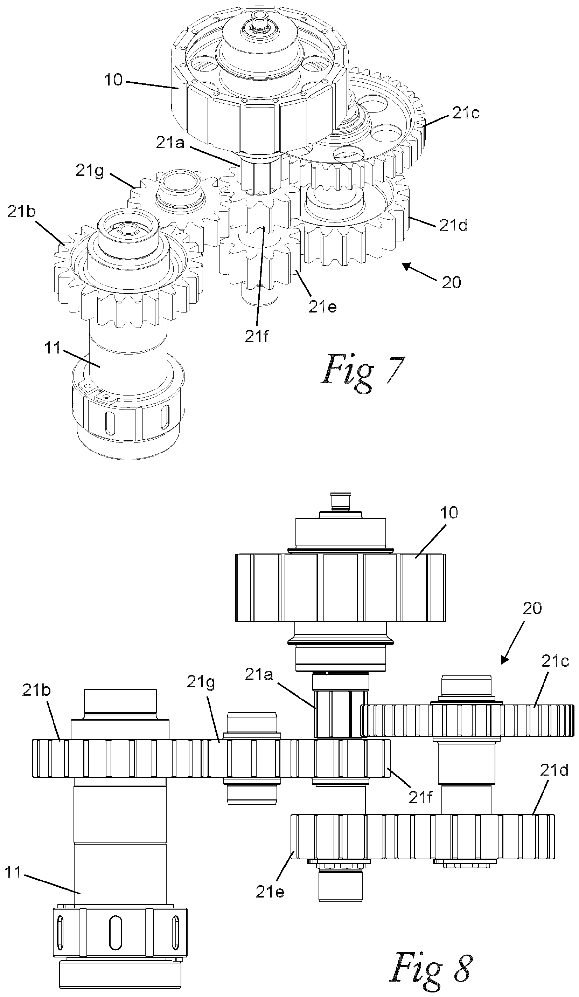

In the illustrated embodiment, the output shaft of the drive motor 10 is rotatable about a first axis of rotation and the spindle 11 is rotatable about a second axis of rotation, which extends in parallel with the first axis of rotation. The first transmission system 20 comprises a first gear wheel 21a (see Figs 7 and 8) which is non-rotatably fixed to the output shaft of the drive motor 10 and a second gear wheel 21b which is non-rotatably fixed to the spindle 11. In the illustrated example, the first gear wheel 21a is drivingly connected to the second gear wheel 21b via several intermediate gear wheels 21c-21g so that the spindle 11 via these gear wheels 21a-21g is made to rotate about the second axis of rotation when the output shaft of the drive motor 10 is rotated about the first axis of rotation. As an alternative, the first gear wheel 21a could be directly engaged with the second gear wheel 21b, without any intermediate gear wheels. By suitable design of the gear wheels of the first transmission system 20, the gear ratio between the output shaft of the drive motor 10 and the spindle 11, and thereby the rotational speed of a machining tool 7 attached to the spindle 11, can be adjusted as needed.

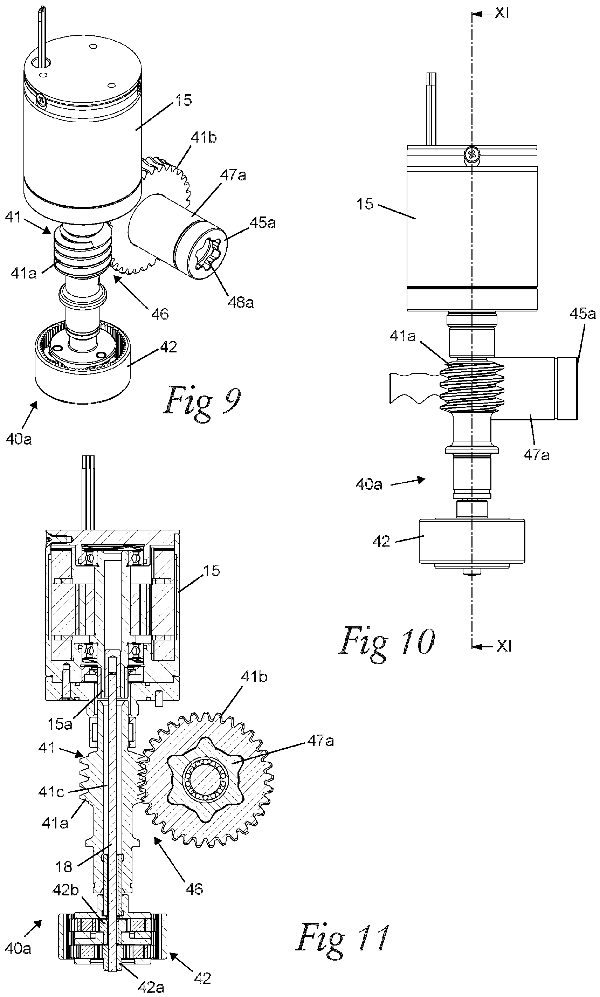

In the illustrated embodiment, the second transmission system 40a, 40b comprises a non-backdrivable worm gear 41 with a worm screw 41a and a worm wheel 41b. The worm wheel 41b meshes with the worm screw 41a and is operatively connected to the feed motor 15 via the worm screw 41a so as to allow the worm wheel 41b to be rotated by the feed motor 15 via the worm screw 41a. The worm screw 41a is operatively connected to the output shaft 15a (see Fig 11) of the feed motor 15 via a reduction gear 42, for instance in the form of a single stage or multi-stage planetary gear arrangement, so as to allow the worm screw 41a to be rotated by the feed motor 15 via the reduction gear 42. In the illustrated example, the output shaft 15a of the feed motor 15 is operatively connected to an input member 42a of the reduction gear 42 via a rotatable shaft 18 that extends through an axial bore 41c in the worm screw 41a, wherein this shaft 18 at a first end is non-rotatably fixed to the output shaft 15a of the feed motor 15 and at an opposite second end is non-rotatably fixed to the input member 42a of the reduction gear 42. The worm screw 41a is, in its turn, non-rotatably fixed to an output member 42b of the reduction gear 42. The worm screw 41a could of course also be operatively connected to the output shaft 15a of the feed motor 15 in any other suitable manner.

The above-mentioned first gear member 31 of the planetary gear 30 is operatively connected or connectable to the worm wheel 41b so as to allow the first gear member 31 to be rotated by the feed motor 15 via the non-backdrivable worm gear 41. In the illustrated embodiment, the second transmission system 40a, 40b also comprises a set of gear wheels 43a-43c (see Figs 16, 17 and 20) for transmitting torque from the worm wheel 41b to the first gear member 31 of the planetary gear 30, wherein this set of gear wheels comprises a first gear wheel 43a which is non-rotatably connected or connectable to the worm wheel 41b and a second gear wheel 43b which meshes with the first gear member 31 of the planetary gear 30. In the illustrated example, the first gear wheel 43a is drivingly connected to the second gear wheel 43b via an intermediate gear wheel 43c so that the first gear member 31 of the planetary gear 30 is made to rotate via these gear wheels 43a-43c when worm wheel 41b is rotated. There could also be more than one intermediate gear wheel 43c between the first and second gear wheels 43a, 43b. As an alternative, the first gear wheel 43a could be directly engaged with the second gear wheel 43b, without any intermediate gear wheel. As a further alternative, the first gear wheel 43a could be directly engaged with the first gear member 31 of the planetary gear 30 without any intermediate gear wheels.

In the illustrated embodiment, the first gear member 31 of the planetary gear 30 is a sun gear, whose teeth have a longer axial extension than the teeth of the planet gears 34. The above-mentioned second gear wheel 43b of the second transmission system is in engagement with a first part of the tooting on the first gear member 31, while the planet gears 34 are in engagement with a second part of the tooting on the first gear member 31, which is axially offset from said first part of the toothing. In the illustrated example, the first gear member 31 is rotatably mounted to the above-mentioned gear shaft 16 via a needle roller bearing 36 (see Figs 16 and 17) and a sleeve 37.

In the illustrated embodiment, the manually operated drive mechanism 50 comprises a manually rotatable drive shaft 51 and a gear mechanism 52 arranged in the above-mentioned housing 14b, wherein the drive shaft 51 is rotatably mounted to the housing 14b via suitable bearings 53a, 53b. The drive shaft 51 is operatively connected to the above-mentioned second gear member 32 of the planetary gear 30 via the gear mechanism 52 to allow the second gear member 32 to be rotated under the effect of the drive shaft 51 via the gear mechanism 52. Furthermore, in the illustrated embodiment, the second gear member 32 of the planetary gear 30 is a ring gear having an internal toothing 32a on its inner periphery and an external toothing 32b on its outer periphery, wherein the external toothing 32b is a helical toothing. In this case, said gear mechanism 52 of the manually operated drive mechanism 50 comprises a helical gear wheel 54 that is non-rotatably fixed to the drive shaft 51 and meshes with the external toothing 32b on the second gear member 32. The helical gear wheel 54 and the drive shaft 51 are with advantage formed in one piece. The drive shaft 51 could of course also be operatively connected to the second gear member 32 of the planetary gear 30 by means of any other suitable type of gear mechanism 52.

In the illustrated example, the second gear member 32 of the planetary gear 30 is positioned between a thrust needle roller bearing 38 (see Figs 16-17) and an open ring slide bearing 39 with one axial end of the second gear member 32 abutting against the thrust needle roller bearing 38 and the opposite axial end of the second gear member 32 abutting against the open ring slide bearing 39.

A socket 55 designed for releasable engagement with a torque tool (not shown) is fixed to the drive shaft 51 at each end thereof so as to allow a torque tool, for instance in the form of a box spanner or the similar, to be connected to the drive shaft 51 when the machining assembly 1 is to be manually moved along the guide track 5 on the machine stand 2 by means of the manually operated drive mechanism 50.

The machining assembly 1 comprises a first rotation restraining arrangement 56 capable of preventing the second gear member 32 of the planetary gear 30 from being rotated by the planet gears 34 of the planetary gear 30, and a second rotation restraining arrangement 46 capable of preventing the first gear member 31 of the planetary gear 30 from being rotated by the planet gears 34 of the planetary gear 30. By preventing the second gear member 32 from being rotated by the planet gears 34, torque can be transmitted from the feed motor 15 to the feed gear wheel 13 via the second transmission system 40a, 40b and the planetary gear 30 to thereby allow the feed gear wheel 13 to be rotated under the effect of the feed motor 15. By preventing the first gear member 31 from being rotated by the planet gears 34, torque can be transmitted from the manually operated drive mechanism 50 to the feed gear wheel 13 via the planetary gear 30 to thereby allow the feed gear wheel 13 to be rotated under the effect of the manually operated drive mechanism 50.

In the illustrated embodiment, said second rotation restraining arrangement 46 is formed by the above-mentioned non-backdrivable worm gear 41, which automatically prevents the first gear member 31 from being rotated under the effect of the rotating planet gears 34 when the planet gears 34 are rotated as a consequence of a rotation of the second gear member 32 under the effect of the manually operated drive mechanism 50. Thus, in this case, the second rotation restraining arrangement 46 is included in the second transmission system 40a, 40b. When the feed motor 15 is turned off and the second gear member 32 is rotated by means of the manually operated drive mechanism 50, the non-backdrivable worm gear 41 prevents the first gear member 31 from rotating, which makes it possible for the planet gears 34, when being rotated by the second gear member 32, to travel around the first gear member 31 and thereby make the planet carrier 33 rotate about its centre axis, which in its turn will cause a rotation of the feed gear wheel 13.

The second rotation restraining arrangement 46 may of course also be designed in any other suitable manner.

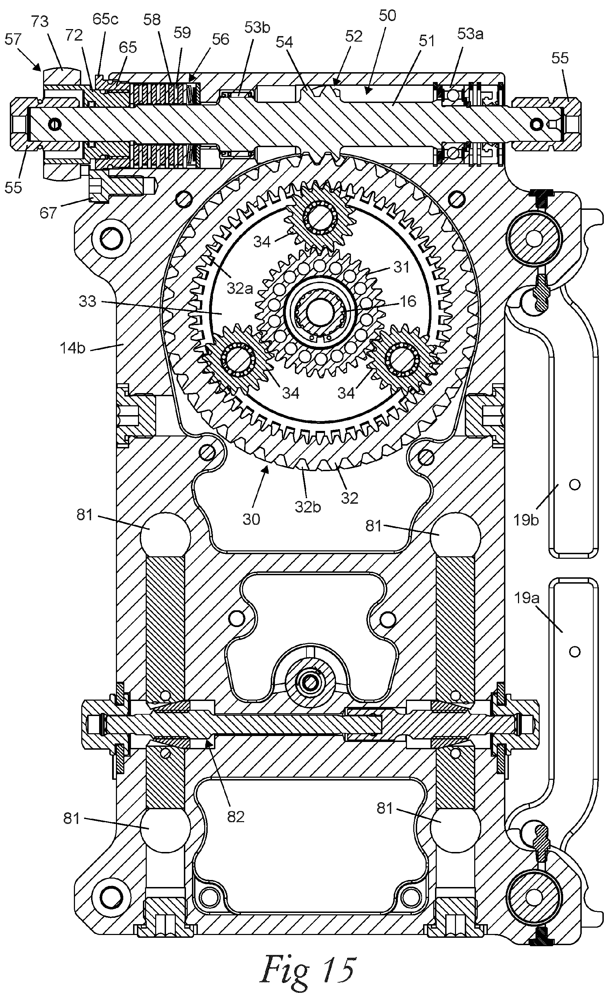

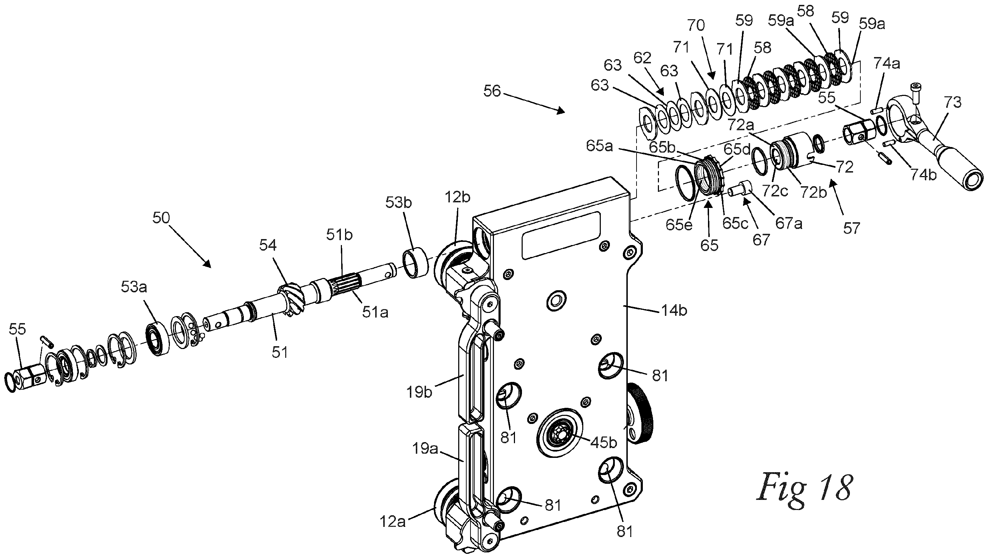

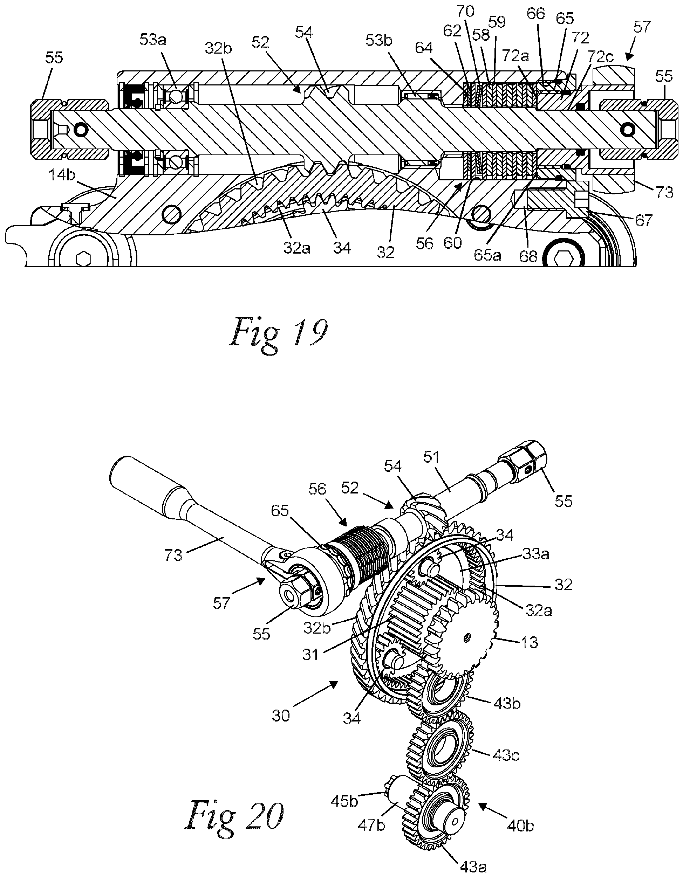

In the illustrated embodiment, the first rotation restraining arrangement 56 is included in the manually operated drive mechanism 50 and configured to act on the drive shaft 51, wherein the first rotation restraining arrangement 56 comprises a manually manoeuvrable manoeuvring member 57, by means of which the first rotation restraining arrangement 56 is shiftable between a rotation-restraining state, in which the first rotation restraining arrangement 56 is configured to restrain rotation of the drive shaft 51 in relation to the above-mentioned housing 14b, and a rotation-allowing state, in which the first rotation restraining arrangement 56 is configured to allow rotation of the drive shaft 51 in relation to the housing 14b. In this case, the first rotation restraining arrangement 56 comprises one or more first rotation restraining elements 58 (see Figs 15, 18 and 19) non-rotatably connected to the drive shaft 51 and one or more second rotation restraining elements 59 non-rotatably connected to the housing 14b, wherein these first and second rotation restraining elements 58, 59 are configured to be pressed against each other into rotation-restraining positive or frictional engagement with each other in the rotation-restraining state of the first rotation restraining arrangement 56. In the illustrated embodiment, the first and second rotation restraining elements 58, 59 have the form of ring-shaped discs and are arranged alternately side by side in a space between an inner wall surface 60 (see Fig 19) of a cavity inside the housing 14b and an outer peripheral surface of a part 51a of the drive shaft 51 surrounded by said inner wall surface 60, wherein the first and second rotation restraining elements 58, 59 are configured to be pressed against each other into rotation-restraining frictional engagement with each other in the rotation-restraining state of the first rotation restraining arrangement 56. The drive shaft 51 extends through a central opening in each one of the first and second rotation restraining elements 58, 59, wherein the first and second rotation restraining elements 58, 59 are moveable in the axial direction of the drive shaft 51. In the illustrated example, each one of the first rotation restraining elements 58 is provided with one or more internal splines on its inner periphery, wherein these internal splines mesh with corresponding external splines 51b (see Fig 18) on the drive shaft 51 in order to force the first rotation restraining elements 58 to rotate together with the drive shaft 51. Each one of the second rotation restraining elements 59 is provided with one or more external splines 59a on its outer periphery, wherein these external splines 59a mesh with corresponding internal splines 61 (see Fig 17a) in said inner wall surface 60 in order to allow the second rotation restraining elements 59 to move along the wall surface 60 in the axial direction of the drive shaft 51 and at the same time prevent the second rotation restraining elements 59 from rotating in relation to the housing 14b.

The first and second rotation restraining elements 58, 59 are with advantage configured to remain in frictional contact with each other under the effect of a spring force from a first spring unit 62 in the rotation-allowing state of the first rotation restraining arrangement 56. The first and second rotation restraining elements 58, 59 will hereby, under the effect of said spring force, exert a braking effect on the drive shaft 51 in the rotation-allowing state of the first rotation restraining arrangement 56. The first spring unit 62 comprises one or more first spring elements 63 (see Fig 18), preferably in the form of Belleville washers, wherein the drive shaft 51 extends through a central opening in each first spring element 63. The spring force exerted by the first spring unit 62 on the first and second rotation restraining elements 58, 59 in the rotation-allowing state of the first rotation restraining arrangement 56 is so adapted that the resulting frictional force between the first and second rotation restraining elements 58, 59 in the rotation-allowing state of the first rotation restraining arrangement 56 is sufficient to prevent the drive shaft 51 from being rotated by the torque exerted on the drive shaft 51 via the planetary gear 30 and the gear mechanism 52 due to the effects of gravity on the machining assembly 1. In the illustrated embodiment, the first and second rotation restraining elements 58, 59 and the first spring elements 63 are, in the rotation-allowing state of the first rotation restraining arrangement 56, clamped between an internal shoulder 64 (see Fig 19) in the housing 14b and an inner end surface 65a of an adjustment sleeve 65, wherein the adjustment sleeve 65 has an external thread 65b that is in engagement with an internal thread 66 (see Fig 19) in the above-mentioned cavity in the housing 14b. The axial position of the adjustment sleeve 65 within the cavity, and thereby the preloading and spring force of the first spring unit 62 in the rotation-allowing state of the first rotation restraining arrangement 56, is adjustable by rotation of the adjustment sleeve 65 in relation to the housing 14b. At its outer end, the adjustment sleeve 65 has an annular collar 65c (see Figs 18, 19 and 22), wherein several grooves 65d are provided on an outer periphery of the collar 65c and distributed about the centre axis of the adjustment sleeve 65. A locking element 67 in the form of a screw is received in a screw hole 68 in the housing 14b, wherein this locking element 67 has a head 67a with an outer periphery that fit to the shape of the grooves 65d in the collar 65c of the adjustment sleeve 65. By bringing the head 67a of the locking element 67 into contact with the groove 65d presently positioned directly above the screw hole 68 in the housing 14b, the adjustment sleeve 65 is locked to the housing 14b in its prevailing position.

In the illustrated embodiment, the first rotation restraining arrangement 56 also comprises a second spring unit 70, which is configured to exert a spring force on the first and second rotation restraining elements 58, 59 in the rotation-restraining state of the first rotation restraining arrangement 56 but not in the rotation-allowing state of the first rotation restraining arrangement 56. The second spring unit 70 comprises one or more second spring elements 71 (see Fig 18), preferably in the form of Belleville washers, wherein the drive shaft 51 extends through a central opening in each second spring element 71. The second spring elements 71 are, together with the first and second rotation restraining elements 58, 59 and the first spring elements 63, clamped between the internal shoulder 64 in the housing 14b and the inner end surface 65a of the adjustment sleeve 65 in the rotation-allowing state of the first rotation restraining arrangement 56. The second spring unit 70 has a higher stiffness than the first spring unit 62 and is configured to remain unloaded in the rotation-allowing state of the first rotation restraining arrangement 56.

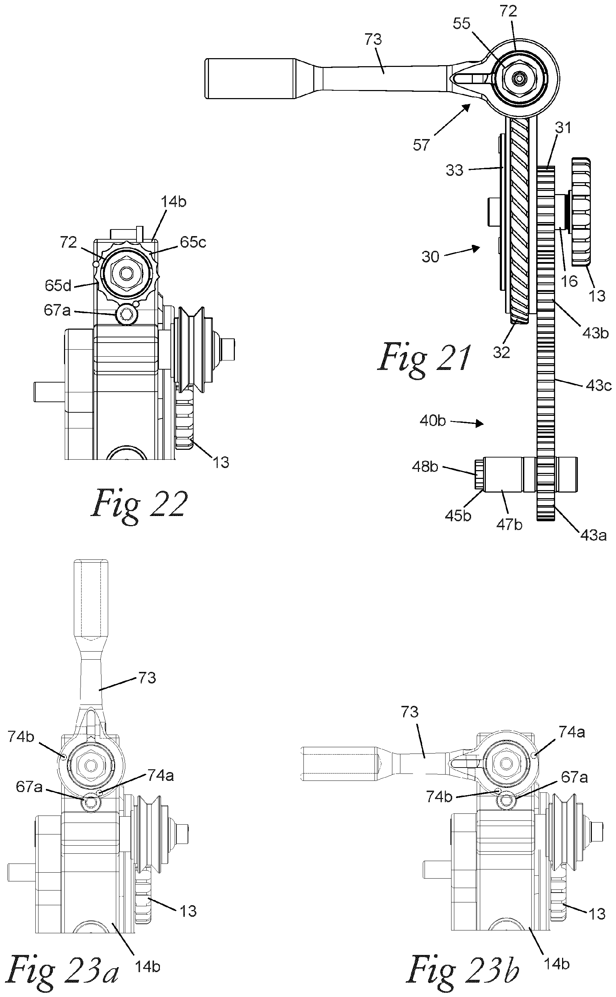

In the illustrated embodiment, the above-mentioned manoeuvring member 57 of the first rotation restraining arrangement 56 comprises an actuating element 72 and a manoeuvring element 73 fixed to the actuating element 72, wherein the actuating element 72 is connected to the housing 14b via an external thread 72b (see Fig 18) on the actuating element that is in engagement with an internal thread 65e in the adjustment sleeve 65. In the illustrated example, the manoeuvring element 73 has the form of a hand lever, but it may as an alternative have the form of a knob or the similar. The actuating element 72 has the form of a sleeve with a central bore 72c, wherein the drive shaft 51 extends with play though the central bore 72c in the actuating element. The manoeuvring element 73 is non-rotatably fixed to the actuating element 72 to allow the actuating element 72 to be rotated in relation to the adjustment sleeve 65 and the housing by manual rotation of the manoeuvring element 73. By manual rotation of the manoeuvring element 73, the actuating element 72 is rotatable in relation to the adjustment sleeve 65 and the housing 14b between a first position (see Fig 23a), corresponding to the rotation-restraining state of the first rotation restraining arrangement 56 and in which the first and second rotation restraining elements 58, 59 are pressed against each other into rotation-restraining frictional engagement with each other under the effect of the actuating element 72, and a second position (see Figs 19-21 and 23b), corresponding to the rotation-allowing state of the first rotation restraining arrangement 56 and in which the first and second rotation restraining elements 58, 59 are rotatable in relation to each other to allow manual rotation of the drive shaft 51. In its first position, the actuating element 72 is in an advanced axial position in the above-mentioned cavity in the housing 14b with an inner end surface 72a of the actuating element 72 projecting beyond the inner end surface 65a of the adjustment sleeve 65. Thus, when the actuating element 72 is in its first position, the first and second rotation restraining elements 58, 59 and the first and second spring elements 63, 71 are clamped between the above-mentioned internal shoulder 64 in the housing 14b and the inner end surface 72a of the actuating element 72. In its second position, the actuating element 72 is in a retracted axial position in the above-mentioned cavity in the housing 14b with its inner end surface 72a flush with or axially behind the inner end surface 65a of the adjustment sleeve 65. Thus, when the actuating element 72 is in its second position, the first and second rotation restraining elements 58, 59 and the first and second spring elements 63, 71 are clamped between the internal shoulder 64 in the housing 14b and the inner end surface 65a of the adjustment sleeve 65. The second spring elements 71 are configured to be preloaded when the actuating element 72 is moved from said second position to said first position to thereby make the second spring unit 70 exert a comparatively high spring force on the first and second rotation restraining elements 58, 59 in the rotation-restraining state of the first rotation restraining arrangement 56. The spring force exerted by the second spring unit 70 on the first and second rotation restraining elements 58, 59 in the rotation-restraining state of the first rotation restraining arrangement 56 is so adapted that the resulting frictional force between the first and second rotation restraining elements 58, 59 in the rotation-restraining state of the first rotation restraining arrangement 56 is sufficient to prevent the drive shaft 51 from being rotated by the torque exerted on the drive shaft 51 via the second gear member 32 of the planetary gear 30 and the gear mechanism 52 when the first gear member 31 of the planetary gear 30 is rotated under the effect of the feed motor 15.

In the illustrated example, the actuating element 72 is rotated at an angle of approximately 90° when being rotated between its first and second positions, wherein a first stop member 74a on the manoeuvring member 57 is configured to abut against the head head 67a of the locking element 67 when the actuating element 72 reaches its first position, as illustrated in Fig 23a, and a second stop member 74b on the manoeuvring member 57 is configured to abut against the head head 67a of the locking element 67 when the actuating element 72 reaches its second position, as illustrated in Fig 23b.

The first rotation restraining arrangement 56 may of course also be designed in any other suitable manner.

In the illustrated embodiment, the above-mentioned housing 14b and guide members 12a-12d form part of a feed unit 1b, wherein the machining assembly 1 also comprises a separate drive unit 1a, which is detachably mounted to the feed unit 1b and which comprises a drive unit housing 14a. The drive motor 10, the feed motor 15 and the first transmission system 20 are arranged in the drive unit housing 14a, and the spindle 11 is rotatably mounted to the drive unit housing 14a. In this case, the second transmission system comprises a first transmission mechanism 40a arranged in the drive unit 1a, a second transmission mechanism 40b arranged in the feed unit 1b and a torque-transmitting coupling mechanism 45 for transmitting torque between a rotatable output member 47a of the first transmission mechanism 40a and a rotatable input member 47b of the second transmission mechanism 40b. Said output member 47a is rotatably mounted to the drive unit housing 14a and operatively connected to the feed motor 15 so as to allow torque to be transmitted from the feed motor 15 to the output member 47a. Said input member 47b is rotatably mounted to the housing 14b of the feed unit 1b and operatively connected to the first gear member 31 of the planetary gear 30 so as to allow torque to be transmitted from the input member 47b to the first gear member 31.

In the illustrated embodiment, the non-backdrivable worm gear 41 is arranged in the drive unit housing 14a and forms part of the first transmission mechanism 40a, whereas the gear wheels 43a-43c are arranged in the feed unit housing 14b and form part of the second transmission mechanism 40b. In the illustrated example, the worm wheel 41b of the non-backdrivable worm gear 41 is non-rotatably fixed to the output member 47a of the first transmission mechanism 40a, wherein the output member 47a is operatively connected to the output shaft of the feed motor 15 via the non-backdrivable worm gear 41 and the reduction gear 42. Furthermore, in the illustrated example, the gear wheel 43a is non-rotatably fixed to the input member 47b of the second transmission mechanism 40b, wherein the input member 47b is operatively connected to the first gear member 31 of the planetary gear 30 via the gear wheels 43a-43c.

The torque-transmitting coupling mechanism 45 comprises a first coupling part 45a and a mating second coupling part 45b configured for torque-transmitting engagement with each other, wherein the first coupling part 45a is non-rotatably connected to the output member 47a of the first transmission mechanism 40a and the second coupling part 45b is non-rotatably connected to the input member 47b of the second transmission mechanism 40b. The first and second coupling parts 45a, 45b are engageable with each other when the drive unit 1a is mounted to the feed unit 1b in order to allow torque to be transmitted from the output member 47a to the input member 47b via the coupling parts 45a, 45b. In the illustrated example, the second coupling part 45b is provided with a protruding element 48b which is configured for engagement with a corresponding recess 48a in the first coupling part 45a. As an alternative, the first coupling part 45a could be provided with a protruding element configured for engagement with a corresponding recess in the second coupling part 45b. The torque transmitting coupling mechanism 45 may of course also have any other suitable design.

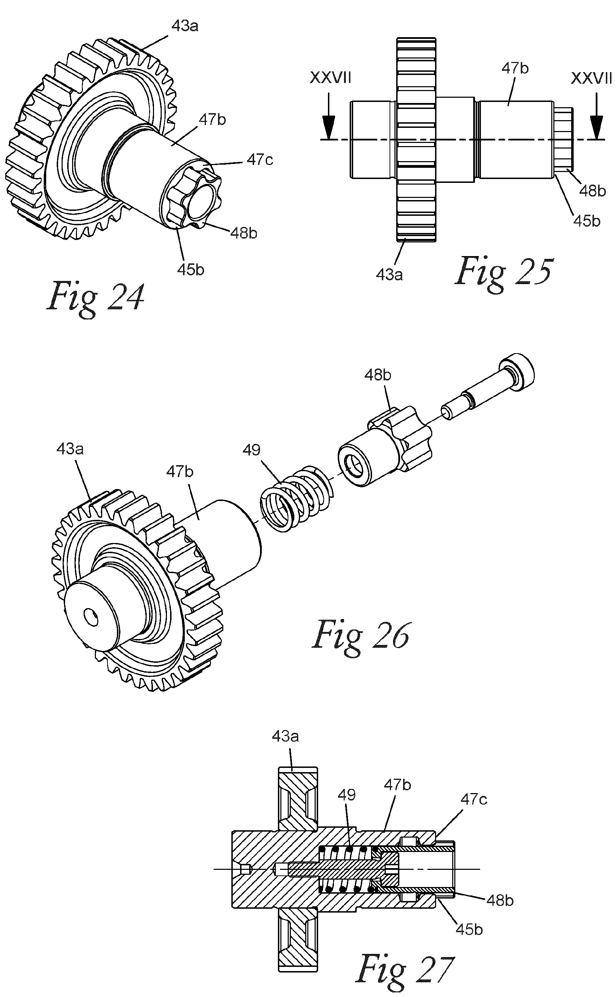

The above-mentioned protruding element 48b of the second coupling part 45b is preferably moveably mounted to the input member 47b of the second transmission mechanism 40b so as to be displaceable in the axial direction of the input member 47b between an advanced position (see Figs 24, 25 and 27), with a front end of the protruding element 48b protruding beyond an end surface 47c on the input member 47b, and a retracted position, with the front end of the protruding element 48b substantially flush with the end surface 47c on the input member 47b, wherein the protruding element 48b is preloaded to the advanced position by a spring 49 and moveable from the advanced position to the retracted position against the action of the spring force from this spring 49. Hereby, the protruding element 48b will automatically snap into the corresponding recess 48a in the first coupling part 45a when the first coupling part assumes a rotary position with the recess 48a correctly aligned with the protruding element 48b. The protruding element 48b and the spring 49 are received in a cavity inside the input member 47b, which opens into the end surface 47c of the input member 47b.

In the illustrated embodiment, the housing 14b of the feed unit 1b comprises a base part 14b1 and a lid 14b2 that is fixed to the base part. In this case, the above-mentioned gear shaft 16 extends through a hole in the lid 14b2 and the gear wheels 43b and 43c are rotatably mounted to a respective gear wheel journal 17b, 17c via an associated needle roller bearing 44b, 44c, wherein the gear wheel journals 17b, 17c are fixed to the lid 14b2.

In the illustrated embodiment, the above-mentioned guide members 12a-12d have the form of rotatable rollers or wheels rotatably mounted to the feed unit housing 14b. The guide members 12a-12d are in engagement with the guide track elements 5a, 5b of the guide track 5 and are arranged to keep the drive unit 1a and the feed unit 1b in place on the column 4, while allowing the drive unit 1a and the feed unit 1b to move along the column 4 in the longitudinal direction thereof. In the illustrated embodiment, two guide members 12a, 12b are arranged on a first side of the feed unit housing 14b and configured for engagement with a first one 5a of the guide track elements and two other guide members 12c, 12d are arranged on an opposite second side of the feed unit housing 14b and configured for engagement with the other guide track element 5b. In order to facilitate the mounting of the feed unit 1b to the guide track 5, the guide members 12a, 12b on the first side of the feed unit housing 14b are laterally moveable in relation to the feed unit housing 14b by means of a respective lever 19a, 19b in the manner described in closer detail in WO 2018/174785 A1. When the feed unit 1b is properly mounted to the guide track 5 with the guide members 12a-12d in engagement with the guide track elements 5a, 5b, the feed gear wheel 13 is in engagement with the cog track 6 and the feed unit 1b is thereby automatically moveable along the guide track 5 by rotation of the feed gear wheel 13 under the effect of the feed motor 15 or the manually operated drive mechanism 50.

The drive unit 1a is detachably securable to the feed unit 1b by means of a coupling device, which in the illustrated embodiment comprises:
- four male-shaped coupling members 80 fixed to the drive unit housing 14a; and
- four female-shaped coupling members 81 fixed to the feed unit housing 14b and configured for engagement with a respective one of the male-shaped coupling members 80; and
- a locking mechanism 82 for locking each male-shaped coupling member 80 to the associated female-shaped coupling members 81, wherein the locking mechanism 82 is designed and operated in the manner described in closer detail in WO 2018/174785 A1.

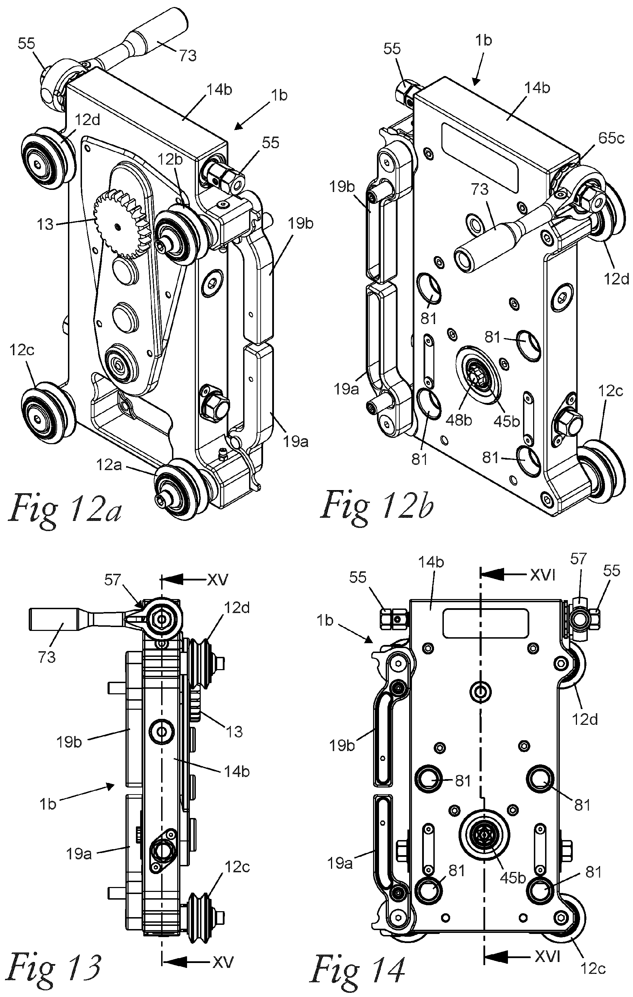

The male-shaped coupling members 80 are with advantage positioned on the drive unit housing 14a in a square, as illustrated in Fig 2, wherein the female-shaped coupling members 81 are positioned on the feed unit housing 14b in a corresponding square, as illustrated in Figs 12b and 14, to thereby allow the drive unit 1a to be secured to the feed unit 1b in four different rotational positions in relation to the feed unit.

The machining assembly 1 may of course be provided with any other suitable type of coupling device for detachably securing the drive unit housing 14a to the feed unit housing 14b.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A machining assembly that is moveable along a guide track (5) on a machine stand (2), wherein the machining assembly (1) comprises:
- a first electric motor (10);
- a rotatable spindle (11) configured for connection to a machining tool;
- a first transmission system (20) for transmitting torque from the first electric motor (10) to the spindle (11) so as to allow the spindle to be rotated under the effect of the first electric motor (10);
- guide members (12a-12d) configured for engagement with said guide track (5) in order to guide the machining assembly (1) along the guide track;
- a feed gear wheel (13) rotatably mounted to a housing (14b) included in the machining assembly (1), wherein the feed gear wheel (13) is configured for engagement with a cog track (6) arranged on the machine stand (2) in parallel with said guide track (5) in order to allow the machining assembly (1) to move along the guide track (5) by rotation of the feed gear wheel (13);
- a planetary gear (30) arranged in said housing (14b) and having a first gear member (31), a second gear member (32), a planet carrier (33) and several planet gears (34) rotatably mounted to the planet carrier (33), wherein one of said first and second gear members (31, 32) is a sun gear and the other one of said first and second gear members (31, 32) is a ring gear, each planet gear (34) meshing with the first gear member (31) and with the second gear member (32), and wherein the planet carrier (33) is operatively connected to the feed gear wheel (13) so as to allow torque to be transmitted from the planet carrier (33) to the feed gear wheel (13);
- a second electric motor (15);
- a second transmission system (40a, 40b) operatively connected to said first gear member (31) of the planetary gear (30) for transmitting torque from the second electric motor (15) to the first gear member (31) so as to allow the first gear member (31) to be rotated under the effect of the second electric motor (15);
- a manually operated drive mechanism (50) operatively connected to said second gear member (32) of the planetary gear (30) so as to allow the second gear member (32) to be rotated under the effect of the manually operated drive mechanism (50);
- a first rotation restraining arrangement (56) capable of preventing said second gear member (32) of the planetary gear (30) from being rotated by the planet gears (34) in order to allow torque to be transmitted from the second electric motor (15) to the feed gear wheel (13) via the second transmission system (40a, 40b) and the planetary gear (30) and thereby allow the feed gear wheel (13) to be rotated under the effect of the second electric motor (15); and
- a second rotation restraining arrangement (46) capable of preventing said first gear member (31) of the planetary gear (30) from being rotated by the planet gears (34) in order to allow torque to be transmitted from the manually operated drive mechanism (50) to the feed gear wheel (13) via the planetary gear (30) and thereby allow the feed gear wheel (13) to be rotated under the effect of the manually operated drive mechanism (50).

2. A machining assembly according to claim 1, **characterized in:**
- **that** the second transmission system (40a, 40b) comprises a non-backdrivable worm gear (41) with a worm screw (41a) and a worm wheel (41b), wherein the worm wheel (41b) meshes with the worm screw (41a) and is operatively connected to the second electric motor (15) via the worm screw (41a) so as to allow the worm wheel (41b) to be rotated by the second electric motor (15) via the worm screw (41a);
- **that** said first gear member (31) of the planetary gear (30) is operatively connected or connectable to the worm wheel (41b) so as to allow the first gear member (31) to be rotated by the second electric motor (15) via the non-backdrivable worm gear (41); and
- **that** the second rotation restraining arrangement (46) is formed by the non-backdrivable worm gear (41).

3. A machining assembly according to claim 1 or 2, **characterized in that** the manually operated drive mechanism (50) comprises a manually rotatable drive shaft (51) rotatably mounted to said housing (14b) and a gear mechanism (52) arranged in the housing (14b), wherein the drive shaft (51) is operatively connected to said second gear member (32) of the planetary gear (30) via the gear mechanism (52) so as to allow the second gear member (32) to be rotated under the effect of the drive shaft (51) via the gear mechanism (52).

4. A machining assembly according to claim 3, **characterized in:**
- **that** said second gear member (32) of the planetary gear (30) is a ring gear having an internal toothing (32a) on its inner periphery and an external toothing (32b) on its outer periphery, wherein said first gear member (31) of the planetary gear (30) is a sun gear; and
- **that** said gear mechanism (52) comprises a gear wheel (54) meshing with the external toothing (32b) on said second gear member (32).

5. A machining assembly according to claim 4, **characterized in that** the external toothing (32b) on said second gear member (32) is a helical toothing, and that said gear wheel (54) of the gear mechanism (52) is a helical gear wheel and is non-rotatably fixed to the drive shaft (51).

6. A machining assembly according to any of claims 3-5, **characterized in:**
- **that** the first rotation restraining arrangement (56) is configured to act on the drive shaft (51); and
- **that** the first rotation restraining arrangement (56) comprises a manually manoeuvrable manoeuvring member (57), by means of which the first rotation restraining arrangement (56) is shiftable between a rotation-restraining state, in which the first rotation restraining arrangement (56) is configured to restrain rotation of the drive shaft (51) in relation to said housing (14b), and a rotation-allowing state, in which the first rotation restraining arrangement (56) is configured to allow rotation of the drive shaft (51) in relation to said housing (14b).

7. A machining assembly according to claim 6, **characterized in that** the first rotation restraining arrangement (56) comprises one or more first rotation restraining elements (58) non-rotatably connected to the drive shaft (51) and one or more second rotation restraining elements (59) non-rotatably connected to said housing (14b), wherein said first and second rotation restraining elements (58, 59) are configured to be pressed against each other into rotation-restraining positive or frictional engagement with each other in the rotation-restraining state of the first rotation restraining arrangement (56).

8. A machining assembly according to claim 7, **characterized in that** said manoeuvring member (57) comprises an actuating element (72) and a manoeuvring element (73) in the form of a knob or hand lever fixed to the actuating element (72), wherein the actuating element (72) is connected to said housing (14b) via an external thread (72b) on the actuating element (72) and, by manual operation of the manoeuvring element (73), rotatable in relation to the housing (14b) between a first position, corresponding to the rotation-restraining state of the first rotation restraining arrangement (56) and in which said first and second rotation restraining elements (58, 59) are pressed against each other into rotation-restraining positive or frictional engagement with each other under the effect of the actuating element (72), and a second position, corresponding to the rotation-allowing state of the first rotation restraining arrangement (56) and in which said first and second rotation restraining elements (58, 59) are rotatable in relation to each other to allow manual rotation of the drive shaft (51).

9. A machining assembly according to claim 8, **characterized in that** the actuating element (72) has the form of a sleeve with a central bore (72c), wherein the drive shaft (51) extends with play though the central bore (72c) in the actuating element (72).

10. A machining assembly according to claim 9, **characterized in that** said first and second rotation restraining elements (58, 59) have the form of ring-shaped discs and are arranged side by side in a space between an inner wall surface (60) of a cavity inside said housing (14b) and an outer peripheral surface of a part (51a) of the drive shaft (51) surrounded by said inner wall surface (60), wherein the first and second rotation restraining elements (58, 59) are configured to be pressed against each other into rotation-restraining frictional engagement with each other in the rotation-restraining state of the first rotation restraining arrangement (56).

11. A machining assembly according to claim 10, **characterized in:**
- **that** each one of said first rotation restraining elements (58) is provided with one or more internal splines on its inner periphery, wherein these internal splines mesh with corresponding external splines (51b) on the drive shaft (51); and
- **that** each one of said second rotation restraining elements (59) is provided with one or more external splines (59a) on its outer periphery, wherein these external splines (59a) mesh with corresponding internal splines (61) in said inner wall surface (60).

12. A machining assembly according to claim 10 or 11, **characterized in that** said first and second rotation restraining elements (58, 59) are configured to remain in frictional contact with each other under the effect of a spring force from one or more spring elements (63) in the rotation-allowing state of the first rotation restraining arrangement (56) to thereby exert a braking effect on the drive shaft (51) in the rotation-allowing state of the first rotation restraining arrangement (56).

13. A machining assembly according to any of claims 1-12, **characterized in:**
- **that** the feed gear wheel (13) is non-rotatably fixed to a rotatable gear shaft (16), which is rotatably mounted to said housing (14b); and
- **that** the gear shaft (16) is non-rotatably connected to the planet carrier (33), preferably through external splines (16a) on the gear shaft (16) that mesh with corresponding internal splines provided in a central bore (33d) in the planet carrier (33).

14. A machining assembly according to any of claims 1-13, **characterized in:**
- **that** said housing (14b) and said guide members (12a-12d) form part of a feed unit (1b);
- **that** the machining assembly (1) further comprises a drive unit (1a), which is detachably mounted to the feed unit (1b) and which comprises a drive unit housing (14a), wherein the first and second electric motors (10, 15) and the first transmission system (20) are arranged in the drive unit housing (14a) and wherein the spindle (11) is rotatably mounted to the drive unit housing (14a);
- **that** the second transmission system comprises a first transmission mechanism (40a) arranged in the drive unit (1a), a second transmission mechanism (40b) arranged in the feed unit (1b) and a torque-transmitting coupling mechanism (45) for transmitting torque between a rotatable output member (47a) of the first transmission mechanism (40a) and a rotatable input member (47b) of the second transmission mechanism (40b), wherein said output member (47a) is rotatably mounted to the drive unit housing (14a) and said input member (47b) is rotatably mounted to the housing (14b) of the feed unit (1b), and wherein said output member (47a) is operatively connected to the second electric motor (15) so as to allow torque to be transmitted from the second electric motor (15) to the output member (47a) and said input member (47b) is operatively connected to said first gear member (31) of the planetary gear (30) so as to allow torque to be transmitted from the input member (47b) to the first gear member (31); and
- **that** the torque-transmitting coupling mechanism (45) comprises a first coupling part (45a) and a mating second coupling part (45b) configured for torque-transmitting engagement with each other, wherein the first coupling part (45a) is non-rotatably connected to the output member (47a) of the first transmission mechanism (40a) and the second coupling part (45b) is non-rotatably connected to the input member (47b) of the second transmission mechanism (40b).

15. A machining assembly according to claim 14 in combination with claim 2, **characterized in that** said non-backdrivable worm gear (41) is arranged in the drive unit housing (14a) and forms part of the first transmission mechanism (40a).
